(19) Europäisches Patentamt
European Patent Office
Office européen des brevets

(11) **EP 0 706 004 B1**

(12) **EUROPEAN PATENT SPECIFICATION**

(45) Date of publication and mention
of the grant of the patent:
**06.08.2003   Bulletin 2003/32**

(51) Int Cl.$^7$: **F16K 17/04**, F16K 7/17

(21) Application number: **95115032.5**

(22) Date of filing: **25.09.1995**

(54) **Relief valve**

Entlastungsventil

Robinet de décharge

(84) Designated Contracting States:
**BE CH DE DK ES FR GB IT LI NL SE**

(30) Priority:  **07.10.1994  US 319857**

(43) Date of publication of application:
**10.04.1996   Bulletin 1996/15**

(73) Proprietor: **Bayer Corporation**
**Pittsburgh, PA 15205-9741 (US)**

(72) Inventor: **Behringer, Bruce E.**
**New Jersey 07656 (US)**

(74) Representative: **Burkert, Frank et al**
**Bayer AG,**
**Konzernbereich RP**
**Patente und Lizenzen**
**51368 Leverkusen (DE)**

(56) References cited:
**WO-A-92/00476**          **DE-A- 3 209 643**
**FR-A- 2 311 239**          **US-A- 3 844 529**
**US-A- 4 852 851**

**Description**

BACKGROUND OF THE INVENTION

The present invention relates to a relief valve with a flexible membrane for use in a miniature hydraulic unified fluid circuit module.

The current state of the art in unified fluid circuit technology involves using a flexible layer or membrane which is sandwiched between blocks of acrylic or similar materials. Cavities are machined into the blocks to create valves, and when joined together, these valves must be opened and closed by a separate air line that is switched between pressure and vacuum. Other gases or liquids can be used for such control. In order to switch between pressure and vacuum, a source of control is needed and this usually consists of a three way solenoid valve and electronic controls. A separate valve and control is usually necessary for each fluid valve.

Often, simple fluid circuits with flow in just one direction become overly complex because of the extra control valves needed. This adds to the cost, size, power requirements and heat output of the overall system.

In US 3,844,529 a fluid amplifying or control valve is disclosed. The fluid valve has a plurality of openings extending to a main internal chamber formed therein, and a membrane extending across said internal chamber separating the internal chamber into upper and lower regions. The membrane is responsive to a pressure signal applied to one side thereof for restricting the flow of fluid from pressure supply through the region opposite the side of the membrane where the pressure signal is applied, giving rise to an increase pressure differential across the restricted area. Using the present valve as an amplifier, the high pressure area of the pressure differential is a linear amplification of the pressure input signal.

From DE-A-3 209 643 a valve is known, which comprises two elements with a membrane in between. The first element serves for conducting the fluid medium, whereas the second element serves for moving the membrane pneumatically. Both elements are separated by the membrane.

The second element is a hollow body, which can be set under pressure to close the valve by pressing the membrane into a closing position or can be set under vacuum for opening the valve by releasing the membrane from that closing position.

SUMMARY OF THE INVENTION

The main object of the present invention is to eliminate the disadvantages of the prior art valves and to provide a relief valve which will allow flow in only one direction and will act passively. This will eliminate the need for three way solenoid valves along with associated tubing, power requirements and control system.

Other objects and advantages of the present invention are achieved in accordance with the present invention by a relief valve comprising first and second rigid layers having a flexible layer mounted there-between and means forming at least one cavity on one side as well as on the other side of the flexible layer. The flexible layer is mounted so as to be moveable into one extreme position in the cavity. A control passage opens into the cavity on one side of the flexible layer and inlet and outlet passages are in communication with the cavity on the other side of the flexible layer. The inlet and outlet passages are prevented from communicating when the flexible layer is in one extreme position and means are provided for applying a first fluid pressure to the control to bias the flexible membrane into that one extreme position. As a result, inlet fluid will flow from the inlet passage to the outlet passage when the pressure of the inlet fluid exceeds the first fluid pressure.

The cavity has a concave surface. A rigid backing member is mounted on the flexible layer. The rigid backing layer preferably extends to overlie the openings of the inlet and outlet passages. The rigid backing layer acts to increase the surface area of the seal and increase the cracking pressure.

In one embodiment, the inlet passage opens into the cavity at a central portion of the concave surface and the outlet passage opens into the cavity at one side of the central portion. In order to effect good sealing by the flexible layer when in the extreme position, in a preferred embodiment, the concave surface has a ridge around the opening of the inlet passage.

The relief valve in accordance with the present invention can be used in fluid systems and in fluid systems and components that are bolted, clamped, solvent welded or bonded together by adhesives or by fusion bonding as disclosed in U.S.P. 4,875,956.

The cavity can be configured with a concave-convex surface and with passageways shown in co-pending application S.N. [Miles 229], filed on the same date as this application and assigned to the same assignee.

The relief valve in accordance with the present invention is preferably used in unified fluid circuits for clinical diagnostic analyzers for hematology, chemistry, chemical and immunology.

These and other features of the present invention will be described in more detail in the following detailed description with reference to the drawings, wherein:

**BRIEF DESCRIPTION OF THE DRAWINGS**

Fig. 1 is a sectional view of a relief valve;

Fig. 2 is a detail of an alternative embodiment of Fig. 3; and

Fig. 3 is a sectional view one embodiment of the present invention.

## DETAILED DESCRIPTION OF THE DRAWINGS

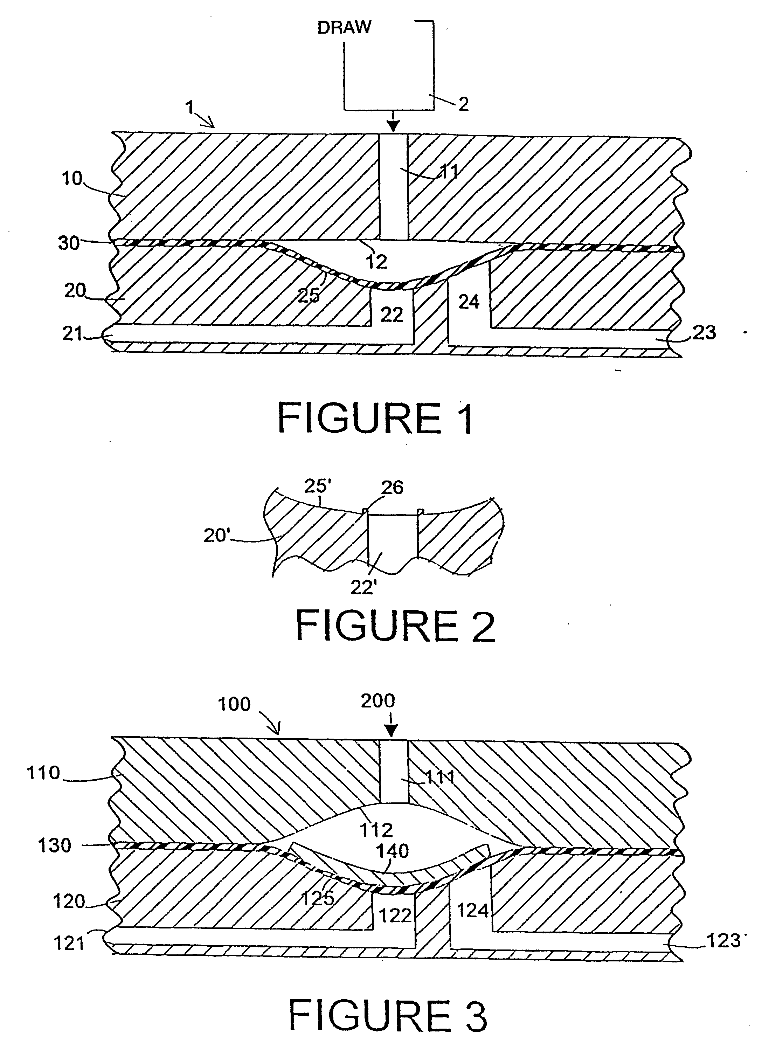

In Fig. 1, which is not an embodiment of the present invention, rigid layers 10 and 20 have a flexible layer 30 mounted there-between. Rigid layer 10 has a planar surface 12 and rigid layer 20 has a cavity demarcated by concave surface 25.

A control passageway 11 extends through the rigid layer 10 into the cavity and is connected to a source of low pressure 2.

Rigid layer 20 has an inlet port consisting of passageway 21 and passageway 22 which opens into the cavity at surface 25 at a central portion thereof as shown. An outlet port consisting of passageway 23 and passageway 24 opens at concave surface 25 to one side of the passageway.

In order to effect improved sealing during the operation of the relief valve, preferred embodiment to the invention according to claim 1 is shown in Fig. 2 wherein rigid layer 20' at concave surface 25', has a ridge 26 encirling the opening of passage 22' into the cavity. As a result of this structure, the flexible membrane 30 will better seal against the ridge 26 without leaking.

Low pressure source 2 provides a low pressure to the chamber demarcated by the surface 12 and the flexible layer 30 to press the flexible layer 30 into the extreme position shown in Fig. 1 so that there is generally no communication between the inlet port and the outlet port.

Since the pressure is constant, there is no need for a solenoid valve with all of the associated tubing and a control system to operate it. The relief valve will act in a passive manner. Several relief valve chambers can be machined into a single block of rigid layers so that a single pressure source can be common to all and only one pressure supply tube is needed to feed many relief valves.

The pressure level from the pressure source 2 into the low pressure chamber formed between surface 25 and flexible layer 30 is the cracking pressure of the relief valve. When the pressure at the inlet port exceeds both the low pressure supplied to that low pressure chamber and the pressure at the outlet port, fluid will flow from the inlet to the outlet. Since the flexible layer as constructed acts like a flexible membrane rather than a rigid membrane, the size of the inlet or outlet ports are of no consequence. The chamber pressure must be higher than the outlet pressure to prevent reverse flow. Very often in analytical instruments, the inlet port will be subjected to a vacuum during a cycle and this will create an even tighter seal and with the constant low pressure applied to the low pressure chamber.

In the embodiment of the invention shown in Fig. 3, the relief valve 100 has two rigid layers 110 and 120 with a flexible layer 130 there-between. In this embodiment, the rigid layer 110 has a cavity formed by a concave surface 112 and a control passage 111 to which a source of low pressure fluid 200 is applied.

The rigid layer 120 has an inlet port consisting of passage 121 and 122 which opens at the center of a concave surface 125 which forms a cavity in the second rigid layer 120. An outlet port is formed by passages 123 and 124 which opens at the concave surface to one side of the passage 122.

In this embodiment, the flexible layer 130 which acts like a flexible membrane in the cavities, has a rigid backing layer 140 disposed thereon and facing concave surface 112. The rigid backing layer increases the surface area of the flexible membrane, since it prevents the deformation of the membrane at the passages 122 and 124.

As in the embodiment of Fig. 1, the opening of passage 122 at surface 125 can be surrounded by a sealing ridge as in the embodiment of Fig. 2.

The rigid backing is preferably configured to have the same curvature as the concave surface 125 and extends to overlie both of the openings of passages 122 and 124.

The cracking pressure of the relief valve in this embodiment is the inlet pressure that is sufficient to move the rigid back flexible membrane off of the inlet seat and allow for flow. This occurs when the force on the inlet side exceeds the force from the low pressure chamber side which is between the flexible layer and the concave surface 112. The force on the inlet side in the closed position is a function of the inlet pressure and the inlet port area and can be expressed by the equation:

$$F_i = P_i A_i$$

where $F_i$ is the force on the inlet side, $P_i$ is the pressure at the inlet and $A_i$ is the area of the inlet port.

The force from the chamber side is a function of the chamber pressure and the area of the rigid backing member and may be expressed by the equation:

$$F_c = K P_c A_b$$

where $F_c$ is the force on the chamber side, $P_c$ is the pressure in the chamber, $A_b$ is the area of rigid backing and K is a proportionality constant.

The pressure and area at the outlet port also have a small effect on the cracking pressure. The inlet and outlet port sizes as well as the size of the rigid backing member and the pressure level in the low pressure chamber all have an effect on the cracking pressure and can be sized independently in order to get the flow characteristics desired from the relief valve.

In summary, a higher cracking pressure is achieved for a given low pressure with the backing layer than without it.

Thus with the same pressure supply tube feeding many relief valves, the individual relief valve cracking pressures can be varied by varying the area of the backing member.

The above-described valves can also operate as pilot operated relief valves.

In one embodiment of the present invention, the rigid layers are comprised of fully normalized clear cast acrylic, and the flexible layer is composed of silicon sheeting. Each of the rigid layers is about 0.10" to 0.25" thick and the flexible layer is about 0.01" thick and has a diameter of about 0.375". The fluid passageways have a diameter of approximately 0.02" and the concave surfaces have a diameter of 0.156", a spherical radius of 0.1" and a depth of about 0.025".

It is understood that the embodiments described hereinabove are merely illustrative and are not intended to limit the scope of the invention. It is realized that various changes, alterations, rearrangements and modifications can be made by those skilled in the art without substantially departing from the scope of the present invention.

## Claims

1. A relief valve (100) comprising:

   first and second rigid layers (110,120) having a flexible layer (130) mounted therebetween and means forming a cavity on one side as well as on the other side of the flexible layer,

   an inlet passage (121,122) and an outlet passage (123,124) in communication with the cavity on the one side of the flexible layer (130),

   a control passage (111) opening into the cavity on the other side of the flexible layer (130),

   whereby the flexible layer (130) is movable into one extreme position in said cavity and the relief valve (100) comprises means (200) for providing a first fluid pressure to the control passage (111) to bias the flexible layer (130) into the one extreme position,

   and the inlet (121,122) and outlet (123,124) passages are prevented from communication when the flexible layer (130) is in the one extreme position,

   and the inlet fluid will flow from the inlet passage (121,122) to the outlet passage (123,124) when the pressure of the inlet fluid exceeds the first fluid pressure,

**characterized in that**,

the cavity on the one side of the flexible layer (130) has a concave surface (125) and a rigid backing member (140) is mounted on the other side of the flexible layer (130), wherein the backing member (140) overlies the openings of the inlet port (122) and the outlet port (124) when the flexible layer (130) is in the one extreme position.

2. The relief valve (100) according to claim 1, wherein the inlet passage (122) opens into the cavity at a central portion of the concave surface (125), wherein the outlet passage (124) opens into the cavity at one side of the central portion of the concave surface (125).

3. The relief valve (100) according to claim 2, wherein the concave surface (25') has a ridge (26) around the opening of the inlet passage (22') to effect a seal with the flexible layer (130) when in the one extreme position.

4. The relief valve (100) according to claims 1-3, wherein the rigid backing member (140) has a convex surface mounted on the flexible layer (130).

5. The relief valve (100) according to claim 4, wherein the convex surface and concave surface (125) has the same curvature.

## Patentansprüche

1. Druckausgleichsventil (100), umfassend:

   erste und zweite starre Schichten (110, 120) mit einer dazwischen angeordneten biegsamen Schicht (130) und Mitteln zur Bildung einer Aushöhlung auf der einen sowie auf der anderen Seite der biegsamen Schicht,

   einen Einlass-Durchgang (121, 122) und einen Auslass-Durchgang (123, 124) in Verbindung mit der Aushöhlung auf der einen Seite der biegsamen Schicht (130),

   einen Steuerungs-Durchgang (111), der sich in die Aushöhlung auf der anderen Seite der biegsamen Schicht (130) öffnet,

   wobei die biegsame Schicht (130) in eine Extremposition in der genannten Aushöhlung bewegbar ist und das Druckausgleichsventil (100) Mittel (200) umfasst, um einen ersten Fluid-Druck auf den Steuerungs-Durchgang (111) zu ergeben, um die biegsame Schicht (130) in die eine Extremposition zu verschieben, und die Einlass-(121, 122)- und Auslass-(123, 124)-Durchgänge daran gehindert werden, miteinander in Verbindung zu stehen, wenn sich die biegsame Schicht (130) in der einen Extremposition befindet, und wobei das Einlass-Fluid aus dem Einlass-Durchgang (121, 122) zum Auslass-Durchgang (123, 124) fliesst, wenn der Druck des Einlass-Fluids den ersten Fluid-Druck übersteigt,

**dadurch gekennzeichnet, dass**

die Aushöhlung auf der einen Seite der biegsamen Schicht (130) eine konkave Oberfläche (125) aufweist und ein starres Stützglied (140) auf der anderen Seite der biegsamen Schicht (130) montiert ist, worin das Stützglied (140) über die Öffnungen des Einlass-Ports (122) und des Auslass-Ports (124) zu liegen kommt, wenn sich die biegsame Schicht (130) in der einen Extremposition befindet.

2. Druckausgleichsventil (100) gemäß Anspruch 1, worin sich der Einlass-Durchgang (122) in die Aushöhlung an einem Zentralbereich der konkaven Oberfläche (125) öffnet, worin sich der Auslass-Durchgang (124) in die Aushöhlung auf einer Seite des Zentralbereichs der konkaven Oberfläche (125) öffnet.

3. Druckausgleichsventil (100) gemäß Anspruch 2, worin die konkave Oberfläche (25') einen Grat (26) um die Öffnung des Einlass-Durchgangs (22') herum aufweist, um einen Verschluss mit der biegsamen Schicht (130) zu bewirken, wenn sie in der einen Extremposition vorliegt.

4. Druckausgleichsventil (100) gemäß Ansprüchen 1 bis 3, worin das starre Stützglied (140) eine konvexe Oberfläche aufweist, die auf die biegsame Schicht (130) montiert ist.

5. Druckausgleichsventil (100) gemäß Anspruch 4, worin die konvexe und konkave Oberfläche (125) die gleiche Krümmung aufweisen.

**Revendications**

1. Soupape de décharge (100) comprenant :

des première et seconde couches rigides (110, 120) comportant une couche souple (130) montée entre elles et un moyen formant une cavité sur un côté de même que sur le côté extérieur de la couche souple,
un conduit (121, 122) d'entrée et un conduit (123, 124) de sortie en communication avec la cavité sur le premier coté de la couche souple (130),
un conduit (111) de commande débouchant dans la cavité sur l'autre côté de la couche souple (130),

ce par quoi la couche souple (130) est mobile dans une position extrême dans ladite cavité et la soupape de décharge (100) comprend un moyen (200) pour fournir une première pression de fluide au conduit (111) de commande pour rappeler la couche souple (130) dans ladite position extrême,

et les conduits (121, 122) d'entrée et (123, 124) de sortie ne peuvent pas communiquer lorsque la couche souple (130) est dans ladite position extrême,

et le fluide d'entrée s'écoule du conduit (121, 122) d'entrée vers le conduit (123, 124) de sortie lorsque la pression du fluide d'entrée dépasse la première pression de fluide,

**caractérisée en ce que**,

la cavité située sur le premier côté de la couche souple (130) présente une surface concave (125), et un élément rigide (140) de renfort est monté sur l'autre côté de la couche souple (130), dans laquelle l'élément (140) de renfort recouvre les ouvertures de l'orifice (122) d'entrée et de l'orifice (124) de sortie lorsque la couche souple (130) se trouve dans ladite position extrême.

2. Soupape de sûreté (100) selon la revendication 1, dans laquelle le conduit (122) d'entrée débouche dans la cavité au niveau d'une partie centrale de la surface concave (125), dans laquelle le conduit (124) de sortie débouche dans la cavité au niveau d'un côté de la partie centrale de la surface concave (125).

3. Soupape de sûreté (100) selon la revendication 2, dans laquelle la surface concave (25') comporte une couronne (26) située autour de l'ouverture du conduit (22') d'entrée pour assurer une étanchéité avec la couche souple (130) lorsqu'elle se trouve dans ladite position extrême.

4. Soupape de sûreté (100) selon les revendications 1 à 3, dans laquelle l'élément rigide (140) de renfort comporte une surface convexe montée sur la couche souple (130).

5. Soupape de sûreté (100) selon la revendication 4, dans laquelle la surface convexe et la surface concave (125) ont la même courbure.

# FIGURE 1

# FIGURE 2

# FIGURE 3